# EUROPEAN PATENT APPLICATION

(11) **EP 4 811 152 A1**
(43) Date of publication of application: **23.09.2026**
(21) Application number: 26162805.1
(22) Date of filing: 06.03.2026
(51) Int. Cl.: G06F 16/21

(54) **INFORMATION PROCESSING APPARATUS, COMPUTER PROGRAM, AND INFORMATION PROCESSING METHOD**

(30) Priority: 18.03.2025 JP 2025043837
(71) Applicant: FUJITSU LIMITED, Kawasaki-shi, Kanagawa 211-8588 (JP)
(72) Inventor: YOSHIDA, Kotaro, Kawasaki-shi, Kanagawa, 211-8588 (JP); MAEDA, Takuma, Kawasaki-shi, Kanagawa, 211-8588 (JP); ADACHI, Tsuyoshi, Kawasaki-shi, Kanagawa, 211-8588 (JP); SHIMOYAMA, Ryota, Kawasaki-shi, Kanagawa, 211-8588 (JP); OKOSHI, Eito, Kawasaki-shi, Kanagawa, 211-8588 (JP)
(74) Representative: Hoffmann Eitle

(57) **Abstract**

An information processing apparatus extracts a subset of vector data from a vector database. The information processing apparatus calculates the value of a predetermined statistical indicator using the extracted subset of the vector data. The information processing apparatus generates a function for obtaining the amount of resources to be used for calculating the value of the statistical indicator for the vector database, based on a first resource amount used for calculating the value of the statistical indicator using the subset of the vector data. Then, the information processing apparatus calculates, using the generated function, a second resource amount to be used for calculating the value of the statistical indicator for the vector database.

## Description

### FIELD

The embodiments discussed herein relate to an information processing apparatus, a computer program, and an information processing method.

### BACKGROUND

One type of database (DB) in a computer system is a vector DB. Vector DBs are DBs that convert unstructured data such as text, images, and audio into high-dimensional vector representations, and efficiently store and search the high-dimensional vector representations. Vector DBs are effective for application to generative artificial intelligence (AI) systems. In particular, in a generative AI technique called retrieval augmented generation (RAG), vector DBs are widely used as a means to refer to external knowledge.

An index is used for searching a vector DB. For example, by preparing, as an index, information such as the degree of similarity between pieces of data in vector form within the vector DB, efficient searches are achieved. An index for a vector DB is reconstructed as appropriate according to an operational status of a system. If the search efficiency of the vector DB decreases, the values of parameters related to the vector DB may be adjusted to improve the search efficiency.

As techniques related to system operation, an index monitoring system has been proposed that is capable of obtaining the status of a monitoring target object including the retention state of an index value. There has also been proposed a normal vector registration device capable of achieving a high calculation speed and a cost reduction by data capacity compression while maintaining abnormality detection accuracy. See, for example, the following literatures.
International Publication Pamphlet No. WO 2012/008621
International Publication Pamphlet No. WO 2023/120473

Measures for improving the search efficiency of a vector DB if the search efficiency decreases include reconstruction of an index, adjustment of parameter values, and others. Whether to implement such an improvement measure is determined by checking various statistical indicators. Conventionally, calculation of statistics is executed without knowing the amount of resources consumed for calculation of the values of statistical indicators. Some statistical indicators that are used for determining whether to implement an improvement measure consume a large amount of resources for their calculation. If the calculation of the values of statistical indicators that consume a large amount of resources is performed during a time zone in which a system load is high, a resource shortage occurs in the entire system, and the search efficiency of the vector DB further decreases.

### SUMMARY

In one aspect, an object of the present disclosure is to enable prediction of the amount of resources consumed for calculation of the values of statistical indicators.

In one aspect, there is provided an information processing apparatus including: a processing unit for: extracting a subset of vector data from a vector database; calculating a value of a predetermined statistical indicator using the extracted subset of the vector data; generating a function for obtaining an amount of resources to be used for calculating the value of the statistical indicator for the vector database, based on a first resource amount used for calculating the value of the statistical indicator using the subset of the vector data; and calculating a second resource amount to be used for calculating the value of the statistical indicator for the vector database, using the generated function.

### BRIEF DESCRIPTION OF DRAWINGS

FIG. 1 illustrates an example of an information processing method according to a first embodiment;
FIG. 2 illustrates an example of a system configuration according to a second embodiment;
FIG. 3 illustrates an example of hardware of a server;
FIG. 4 is a block diagram illustrating an example of functions of the server;
FIG. 5 illustrates an example of statistical indicator information;
FIG. 6 is a flowchart illustrating an example procedure for a statistical indicator calculation process;
FIG. 7 is a flowchart illustrating an example procedure for a calculation cost prediction process;
FIG. 8 is a flowchart illustrating an example procedure for an adaptive statistical indicator calculation process; and
FIG. 9 illustrates an example of a screen displaying statistical indicator information.

### DESCRIPTION OF EMBODIMENTS

Hereinafter, embodiments will be described with reference to the drawings. A plurality of embodiments may be combined unless they exclude each other.

### [First Embodiment]

A first embodiment relates to an information processing method that enables prediction of the amount of resources consumed for calculation of the value of a statistical indicator related to a vector DB. The term "statistical indicator" herein is a concept that broadly includes any numerical indicators for analysis and evaluation useful for the operation and management of a vector DB. Statistical indicators may include not only indicators generally provided in systems having vector DBs, but also metrics uniquely added and implemented by a user or a third party. Specific examples of the statistical indicators include, but are not limited to, a search accuracy evaluation value, a predicted cost for index reconstruction, and a visualization parameter of a data distribution.

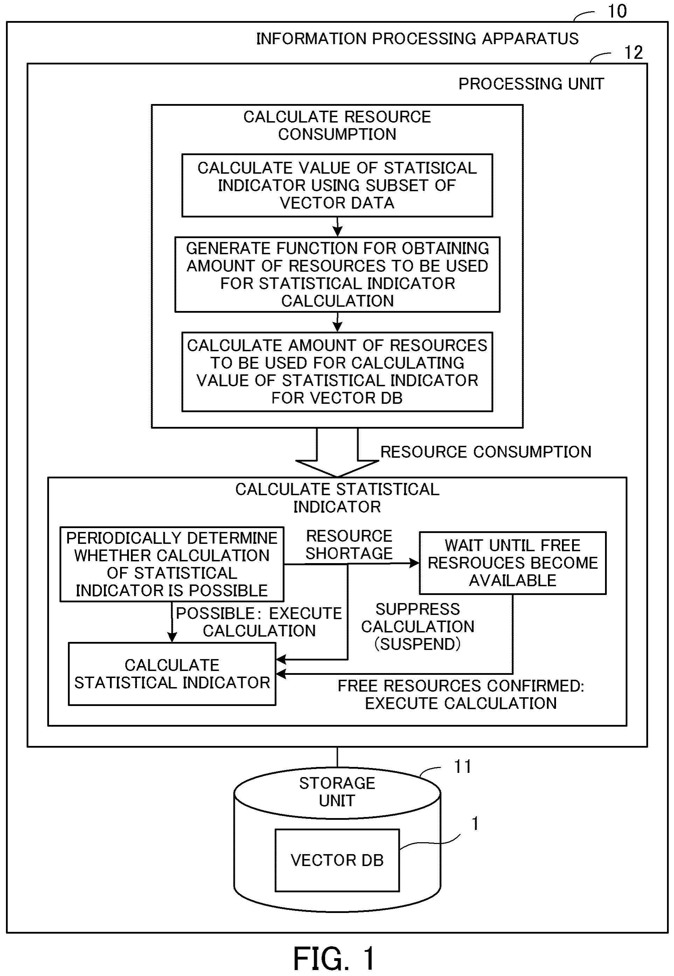

FIG. 1 illustrates an example of the information processing method according to the first embodiment. FIG. 1 illustrates an information processing apparatus 10 for implementing the information processing method according to the first embodiment. The information processing apparatus 10 is able to implement the information processing method according to the first embodiment by, for example, executing a predetermined information processing program.

The information processing apparatus 10 includes a storage unit 11 and a processing unit 12. The storage unit 11 is, for example, a memory or a storage device included in the information processing apparatus 10. The processing unit 12 is, for example, a processor included in the information processing apparatus 10. The information processing apparatus 10 may include a plurality of processors. Among a plurality of processes performed by the information processing apparatus 10, a certain process and another process may be performed by different processors.

The storage unit 11 stores a vector DB 1. The vector DB 1 is a DB that converts various information into vector data and manages the vector data. The processing unit 12 calculates the value of a statistical indicator related to the vector DB 1. At this time, the processing unit 12 predicts the amount of resources consumed for the calculation of the value of the statistical indicator, and then calculates the value of the statistical indicator during a time zone in which free resources corresponding to the predicted resource consumption are available. For example, the processing unit 12 predicts the amount of resources consumed for the calculation of the value of the statistical indicator in the following procedure.

The processing unit 12 extracts a subset of vector data from the vector DB 1. Next, the processing unit 12 calculates the value of a predetermined statistical indicator using the extracted subset of the vector data. Further, the processing unit 12 generates, based on the amount of resources (first resource amount) used for calculating the value of the statistical indicator using the subset of the vector data, a function for obtaining the amount of resources to be used for calculating the value of the statistical indicator for the vector DB 1. The function is generated by, for example, regression analysis.

Then, the processing unit 12 calculates the amount of resources (second resource amount) to be used for calculating the value of the statistical indicator for the vector DB 1, using the generated function. The calculated second resource amount indicates the resource consumption for calculating the value of the statistical indicator for the vector DB 1.

In this manner, the function for obtaining the amount of resources is generated using a small amount of vector data, and, by using the function, the resource consumption for calculating the value of the statistical indicator for the vector DB 1 is obtained. By obtaining the resource consumption needed for calculating the value of the statistical indicator for the vector DB 1, it becomes possible to determine appropriate timing for executing the calculation of the value of the statistical indicator. As a result, it is possible to suppress a decrease in the processing efficiency of the information processing apparatus 10 caused by the calculation of the value of the statistical indicator being performed under a situation in which the amount of free resources in the information processing apparatus 10 is less than the resource consumption needed for calculating the value of the statistical indicator.

In this connection, there may be a plurality of statistical indicators to be calculated. When a statistical indicator is newly designated as a calculation target, the processing unit 12 generates a function for obtaining the amount of resources to be used for calculating the value of that statistical indicator. For example, with regard to a plurality of statistical indicators to be calculated, the processing unit 12 checks, for each statistical indicator, whether a function for obtaining the amount of resources to be used for calculating the value of that statistical indicator exists. Then, if a function does not exist for a statistical indicator, the processing unit 12 generates a corresponding function. The generated function is stored in, for example, the storage unit 11. By doing so, the function is easily generated.

The resource consumption for calculating the value of a statistical indicator for the vector DB 1 is used, for example, for determining whether it is appropriate timing to execute the calculation of the value of the statistical indicator. For example, the processing unit 12 determines, based on the resource consumption for calculating the value of the statistical indicator, whether it is possible to calculate the value of the statistical indicator for the vector DB 1. Then, if determining that the calculation is possible, the processing unit 12 calculates the value of the statistical indicator for the vector DB 1. Accordingly, in the case where the calculation of the value of the statistical indicator consumes a large amount of resources, it is possible to suppress an unexpectedly large decrease in the processing efficiency of the information processing apparatus 10 caused by execution of the calculation.

For example, in the case where the amount of free resources is less than the resource consumption (resource shortage), the processing unit 12 determines that the calculation of the value of the statistical indicator for the vector DB 1 is not possible, and suppresses the calculation of the value of the statistical indicator. After confirming that the amount of free resources becomes greater than or equal to the resource consumption, the processing unit 12 calculates the value of the statistical indicator for the vector DB 1. In the manner described above, the calculation of the value of the statistical indicator for the vector DB 1 is promptly started when sufficient free resources become available.

In addition, during the calculation of the value of the statistical indicator for the vector DB 1, the processing unit 12 determines whether a resource shortage will occur, based on the resource consumption. If it is determined that a resource shortage will occur, the processing unit 12 suspends the calculation of the value of the statistical indicator. Then, after confirming that the amount of free resources becomes greater than or equal to the resource consumption, the processing unit 12 resumes the calculation of the value of the statistical indicator for the vector DB 1. In the manner described above, the value of the statistical indicator is efficiently calculated without causing a resource shortage in the information processing apparatus 10.

### [Second Embodiment]

A second embodiment relates to a computer system that is capable of efficiently calculating, at appropriate timing, various statistical indicators useful for determining whether index reconstruction of a vector DB needs to be performed.

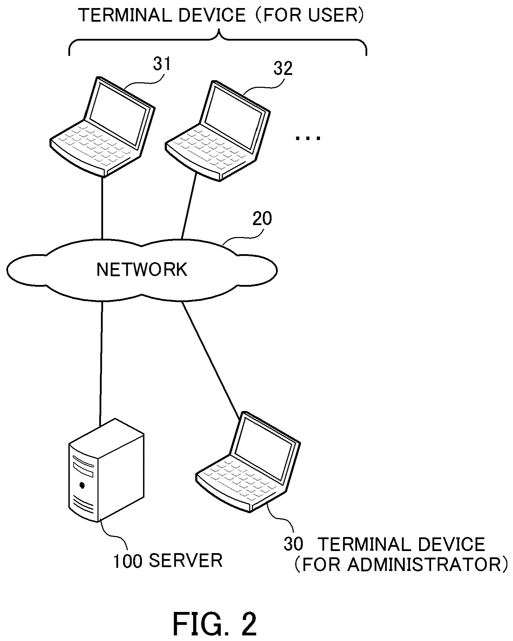

FIG. 2 illustrates an example of a system configuration according to the second embodiment. Terminal devices 30, 31, 32, ... are connected to a server 100 having a vector DB via a network 20.

The vector DB is, for example, a large-scale DB that stores 10 million to several billion pieces of vector data converted using an embedding technique. With such a large amount of data, consumption of memory usage and computational resources (such as central processing unit (CPU), memory, and input/output (I/O)) is exceedingly large, and this makes tuning for stable operation highly difficult. Embedding techniques are designed to convert text data (such as sentences and words) into numerical vectors (points in a multidimensional space). The embedding techniques make it possible to numerically evaluate the semantic similarity between texts, thereby allowing for efficient execution of similar document searches, semantic clustering, and others.

For example, when the server 100 handles vector data, the server 100 uses approximately (4d + 8m) bytes of memory per vector (where d is an integer indicating the number of dimensions, and m is an integer indicating an internal parameter) . Assuming d = 3073 dimensions and m = 32, a memory usage of approximately 12 GB occurs for 1 million vectors and approximately 120 GB for 10 million vectors. In the case of handling large-scale data, such memory usage becomes a non-negligible problem.

In order to operate such a vector DB with stable performance, appropriate tuning is needed. Examples of the tuning include index reconstruction and parameter adjustment.

The terminal device 30 is a computer that is used by an administrator to manage the server 100. The terminal devices 31, 32, ... are computers that are used by users who use services provided by the server 100. The server 100 is a computer that provides services in response to processing requests from the terminal devices 31, 32, ....

The administrator manages the server 100 using the terminal device 30 so that the server 100 is able to operate stably. For example, in the case where the performance of the server 100 degrades and the cause is an index of the vector DB, the administrator instructs the server 100 to reconstruct the index via the terminal device 30.

The administrator is able to determine whether index reconstruction needs to be performed, based on statistical indicators acquired from the server 100. For example, the terminal device 30 receives data of various statistical indicators from the server 100 and displays the statistical indicators. The administrator determines, based on transitions of values of the displayed statistical indicators, whether the index in the vector DB needs to be reconstructed.

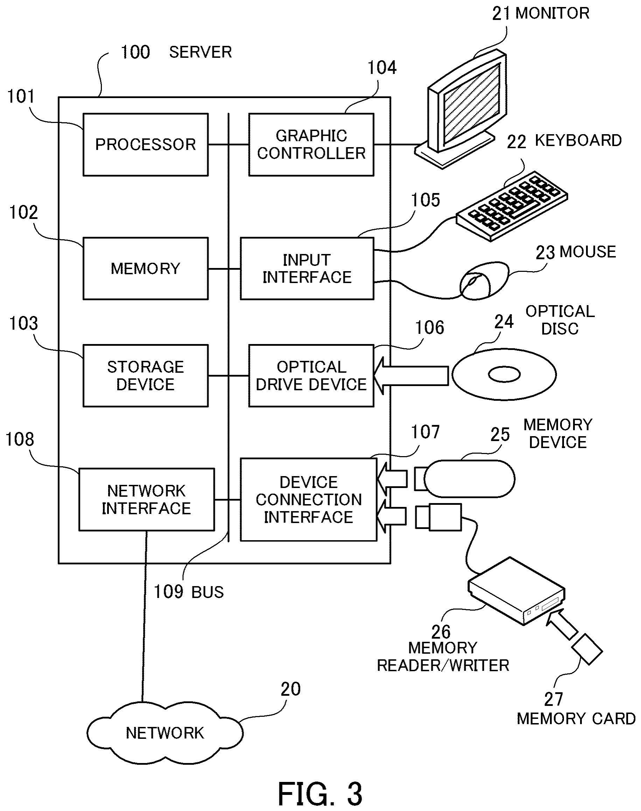

FIG. 3 illustrates an example of hardware of the server. The server 100 is entirely controlled by a processor 101. A memory 102 and a plurality of peripheral devices are connected to the processor 101 via a bus 109.

The server 100 may be a multiprocessor system having a plurality of processors. A set of processors in a multiprocessor system may be referred to as the processor 101. The processor 101 may be referred to as processor circuitry. Each of the plurality of processors is able to perform some or all of the plurality of processes performed by the server 100. Among a plurality of related processes, two or more processes may be performed by different processors.

The processor 101 is, for example, a CPU, a micro processing unit (MPU), or a digital signal processor (DSP). At least a part of the functions implemented by the processor 101 executing the program may be implemented by an electronic circuit such as an application specific integrated circuit (ASIC) or a programmable logic device (PLD).

The memory 102 is used as a main storage device of the server 100. The memory 102 temporarily stores at least a part of operating system (OS) programs and application programs to be executed by the processor 101. The memory 102 also stores various data to be used by the processor 101 during its operation. As the memory 102, for example, a volatile semiconductor storage device such as a random access memory (RAM) is used.

The peripheral devices connected to the bus 109 include a storage device 103, a graphic controller 104, an input interface 105, an optical drive device 106, a device connection interface 107, and a network interface 108.

The storage device 103 electrically or magnetically writes and reads data to and from a built-in storage medium. The storage device 103 is used as an auxiliary storage device of the server 100. The storage device 103 stores OS programs, application programs, and various data. As the storage device 103, for example, a hard disk drive (HDD) or a solid state drive (SSD) may be used.

The graphic controller 104 is an arithmetic device that performs image processing. The graphic controller 104 is, for example, a graphics processing unit (GPU). A monitor 21 is connected to the graphic controller 104. The graphic controller 104 displays images on the screen of the monitor 21 in accordance with instructions from the processor 101. Examples of the monitor 21 include a display device using organic electro luminescence (EL) and a liquid crystal display device. In the case where, for example, a GPU is used as the graphic controller 104, the graphic controller 104 is able to execute complicated numerical calculations such as matrix calculations.

A keyboard 22 and a mouse 23 are connected to the input interface 105. The input interface 105 transmits signals received from the keyboard 22 and the mouse 23 to the processor 101. The mouse 23 is an example of a pointing device, and other pointing devices may be used. Examples of other pointing devices include a touch panel, a tablet, a touch pad, and a track ball.

The optical drive device 106 reads data recorded on an optical disc 24 or writes data to the optical disc 24 using laser light or the like. The optical disc 24 is a portable storage medium on which data is recorded so as to be readable by reflection of light. The optical disc 24 may be a digital versatile disc (DVD), a DVD-RAM, a compact disc read only memory (CD-ROM), a CD-recordable (CD-R), CD-rewritable (CD-RW), or the like.

The device connection interface 107 is a communication interface for connecting peripheral devices to the server 100. For example, a memory device 25 and a memory reader/writer 26 may be connected to the device connection interface 107. The memory device 25 is a storage medium having a function of communicating with the device connection interface 107. The memory reader/writer 26 is a device that writes data to a memory card 27 or reads data from the memory card 27. The memory card 27 is a card-type storage medium.

The network interface 108 is connected to the network 20. The network interface 108 transmits and receives data to and from other computers or communication devices via the network 20. The network interface 108 is a wired communication interface connected to a wired communication device such as a switch or a router via a cable. Alternatively, the network interface 108 may be a wireless communication interface communicatively connected to a wireless communication device such as a base station or an access point by radio waves.

With the hardware as described above, the server 100 is able to implement the processing functions of the second embodiment. The apparatus described in the first embodiment is also able to be implemented with hardware similar to that of the server 100 illustrated in FIG. 3.

The server 100 implements the processing functions of the second embodiment by executing a program recorded on a computer-readable storage medium, for example. The program describing the processing contents to be executed by the server 100 may be recorded on various storage media. For example, a program to be executed by the server 100 may be stored in the storage device 103. The processor 101 loads at least a part of the program from the storage device 103 into the memory 102 and executes the program. The program to be executed by the server 100 may be recorded on a portable storage medium such as the optical disc 24, the memory device 25, or the memory card 27. The program stored in the portable storage medium becomes executable after being installed in the storage device 103 under the control of the processor 101, for example. Alternatively, the processor 101 may execute the program while reading it directly from the portable storage medium.

The vector DB used in the system illustrated in FIG. 2 has characteristics significantly different from those of relational databases, and the following difficulties exist in the operation of the vector DB.

### (1) Difficulty in Dealing with Degradation of Index Structure

In a vector DB, the index structure degrades as data is added or updated, or as a distribution changes. If the index structure degrades, search accuracy and performance (such as query response time) suffer. Therefore, index reconstruction of the vector DB is performed at appropriate timing. However, evaluation indicators used for determining the timing for the index reconstruction are not clear, making it difficult to determine whether the index reconstruction needs to be performed.

### (2) Introduction of Accuracy-Related Indicators and Uncertainty of Evaluation Criteria

In order to accurately grasp the search accuracy of a vector DB and factors (such as bias in a data distribution and mismatch of index parameters) that cause a decrease in the search accuracy, various statistical indicators are needed, such as accuracy indicators of search results and indicators for analyzing factors affecting accuracy. However, mechanisms for obtaining and evaluating such statistical indicators at a reasonable cost, and criteria regarding timing for collecting data to be used for calculating the values of the statistical indicators have not been sufficiently established.

### (3) Increase in Resource Consumption and Collection Timing Problem

If not only resource prediction indicators needed for index reconstruction but also various statistical indicators for accuracy-related analysis and factor analysis are introduced, additional CPU time and memory are needed for acquiring and calculating these indicators. If aggregation and analysis are performed in a production environment without control, there is a concern about adverse effects on operational traffic. Further, criteria for determining which indicators need to be collected at what timing to efficiently and accurately grasp the state of the vector DB are not clear.

In order to address the difficulties in the operation of the vector DB as described above, it is important to establish, in the server 100 having the vector DB, an environment capable of systematically handling various statistical indicators useful for index reconstruction and for accuracy and performance management of the vector DB. For example, it is requested that the server 100 having the vector DB monitors system resource status in real time, and automatically collects statistical indicators only when surplus resource capacity is available.

Therefore, in order to solve these problems, the server 100 according to the second embodiment performs autonomous management for efficiently calculating various statistical indicators at appropriate timing. This enables optimal maintenance and evaluation while maintaining the accuracy and performance of the vector DB.

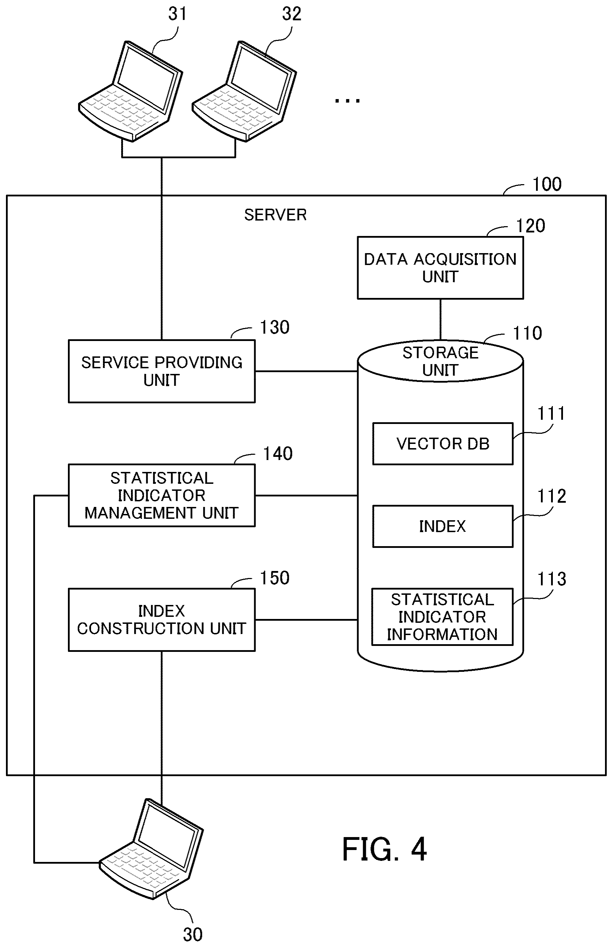

FIG. 4 is a block diagram illustrating an example of functions of the server. The server 100 includes a storage unit 110, a data acquisition unit 120, a service providing unit 130, a statistical indicator management unit 140, and an index construction unit 150.

The storage unit 110 includes a vector DB 111, an index 112, and statistical indicator information 113. The vector DB 111 is a DB in which vector data corresponding to data to be managed is registered. The index 112 is data prepared for efficiently searching the vector data. For example, the index 112 includes information such as the degree of similarity between pieces of vector data in the vector DB 111. The statistical indicator information 113 is information related to statistical indicators such as the performance of the server 100 or the operational status of the vector DB 111.

The data acquisition unit 120 acquires data to be managed, converts the data into vector data, and registers the vector data in the vector DB 111. For example, the data acquisition unit 120 acquires data from another computer and registers the acquired data in the vector DB 111.

The service providing unit 130 provides services using the vector DB 111 to users who use the terminal devices 31, 32, .... For example, the service providing unit 130 provides an interactive information providing service using generative AI.

The statistical indicator management unit 140 manages statistical indicators related to the performance and others of the server 100. For example, the statistical indicator management unit 140 predicts a calculation cost (the amount of resources to be used for calculation) for each of a plurality of statistical indicators, and calculates the statistical indicators at timing when sufficient calculation capacity corresponding to the predicted calculation cost is available. The statistical indicator management unit 140 stores the calculated statistical indicators in the storage unit 110.

The index construction unit 150 constructs the index 112 of the vector DB 111. For example, the index construction unit 150 constructs the index 112 when the vector DB 111 is generated. In addition, after the operation of a service using the vector DB 111 is started, the index construction unit 150 performs index reconstruction in accordance with an instruction from the terminal device 30. For example, the index construction unit 150 transmits the statistical indicator information 113 to the terminal device 30. The administrator using the terminal device 30 inputs an index reconstruction instruction to the terminal device 30 on the basis of the statistical indicator information 113 displayed on the terminal device 30. Then, the terminal device 30 transmits the index reconstruction request to the server 100. The index construction unit 150 reconstructs the index 112 in response to the index reconstruction request from the terminal device 30.

The function of each element illustrated in FIG. 4 may be implemented by causing the processor 101 to execute a program module corresponding to that element, for example.

In the above-described server 100, as a large amount of data is added to the vector DB 111 by the data acquisition unit 120, the amount of data that is not managed by the index 112 increases, and the search performance of the vector DB 111 degrades. The administrator determines whether to reconstruct the index, based on a plurality of statistical indicators. These statistical indicators may include those with high calculation costs.

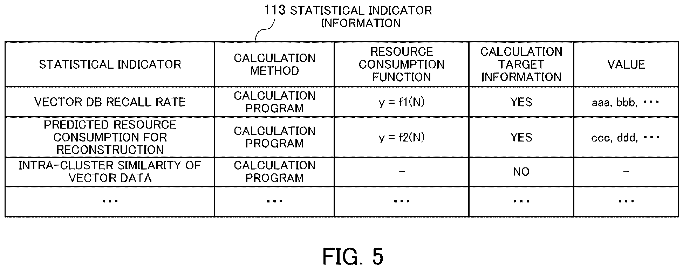

FIG. 5 illustrates an example of the statistical indicator information. For example, the statistical indicator information 113 contains, in association with the name of a statistical indicator to be calculated, a calculation method, a resource consumption function, calculation target information, and calculated values of the statistical indicator.

The calculation method is a method for calculating the value of the corresponding statistical indicator. For example, a calculation program for calculating the value of the statistical indicator is set as the calculation method.

The resource consumption function is a function expression for calculating the amount of resources to be consumed for calculation of the value of the corresponding statistical indicator. In the source consumption function, for example, the amount of data is set as an explanatory variable, and the resource consumption for that amount of data is set as a target variable. In the case where a plurality of resources are to be managed, a resource consumption function is set for each resource. The resource consumption function is generated, for example, when the value of the corresponding statistical indicator is calculated for the first time.

The calculation target information indicates whether the corresponding statistical indicator is a calculation target. The calculation target information of "YES" indicates that the statistical indicator is a calculation target. The calculation target information of "NO" indicates that the statistical indicator is not a calculation target. For example, when the administrator inputs an instruction to set a statistical indicator to be calculated, to the terminal device 30, information indicating the statistical indicator to be calculated is transmitted from the terminal device 30 to the server 100. Then, the statistical indicator management unit 140 sets "YES" in the calculation target information corresponding to the statistical indicator in the statistical indicator information 113.

As the values of the statistical indicator, the values of the statistical indicator calculated in the past are registered, for example, in time series.

Examples of the statistical indicators include a vector DB recall rate, a predicted resource consumption for reconstruction, and intra-cluster similarity of vector data. The vector DB recall rate is an evaluation indicator regarding inference results obtained by an AI model using the vector DB 111. In order to obtain the vector DB recall rate, inference by the AI model is repeatedly performed and statistical calculations are performed. Therefore, the calculation of the vector DB recall rate consumes a large amount of resources. The predicted resource consumption for reconstruction is an amount of resources predicted to be used for reconstructing the index 112 of the vector DB 111. The intra-cluster similarity of vector data is an average value of similarities between pieces of vector data within a cluster in which similar pieces of vector data in the vector DB 111 are grouped together.

As described above, the calculation of some statistical indicators consumes a large amount of computational resources. If such a statistical indicator is calculated when the amount of free resources is insufficient, the processing load on the server 100 becomes excessive. To avoid this, the statistical indicator management unit 140 calculates the statistical indicator when surplus resources capacity is available in the server 100.

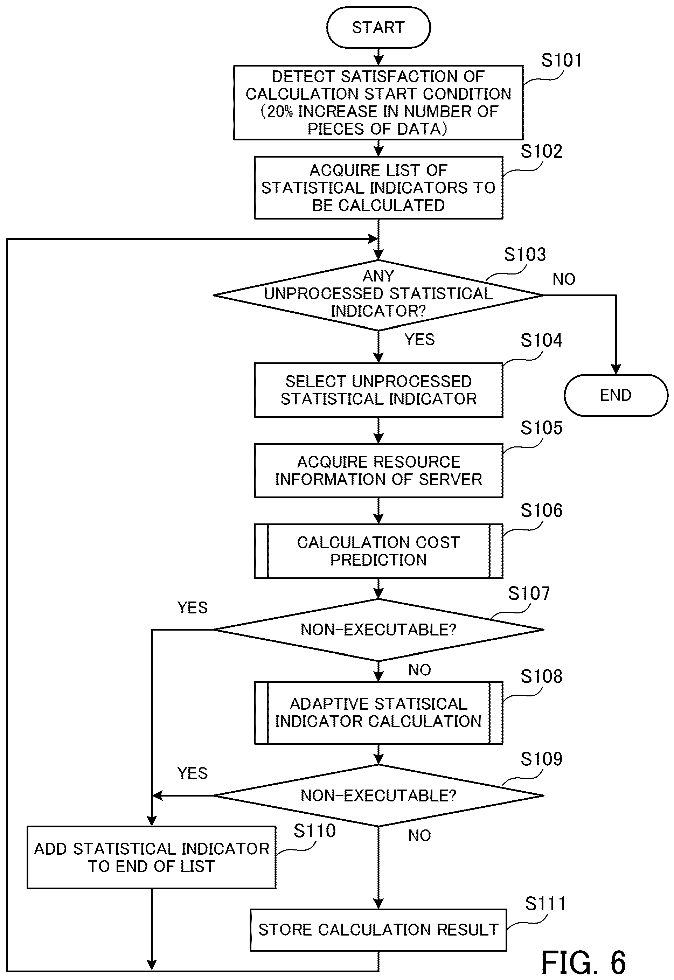

FIG. 6 is a flowchart illustrating an example procedure for a statistical indicator calculation process. Hereinafter, the process illustrated in FIG. 6 will be described in order of step numbers.

[Step S101] The statistical indicator management unit 140 detects that a condition for starting calculation of a value of a statistical indicator is satisfied. The calculation start condition is, for example, that the number of pieces of data in the vector DB 111 has increased by 20% since the previous statistical indicator calculation.

[Step S102] The statistical indicator management unit 140 acquires a list of statistical indicators to be calculated. For example, the statistical indicator management unit 140 refers to the statistical indicator information 113 and generates a list of statistical indicators for which "YES" is set as a calculation target.

[Step S103] The statistical indicator management unit 140 determines whether the statistical indicators to be calculated include any statistical indicator that has not been processed. If such an unprocessed statistical indicator is found, the statistical indicator management unit 140 advances the process to step S104. If all the statistical indicators have been processed, the statistical indicator management unit 140 completes the statistical indicator calculation process.

[Step S104] The statistical indicator management unit 140 selects one of the unprocessed statistical indicators. The statistical indicator management unit 140 deletes the selected statistical indicator from the list of statistical indicators.

[Step S105] The statistical indicator management unit 140 acquires resource information of the server 100. The resource information includes information such as the amount of resources and the amount of free resources, for each type of resource included in the server 100. Types of resources include CPU, memory, and storage device. For the CPU, for example, information such as CPU utilization is acquired as the resource information. For the memory, information such as a memory amount, free memory capacity, and memory utilization is acquired as the resource information.

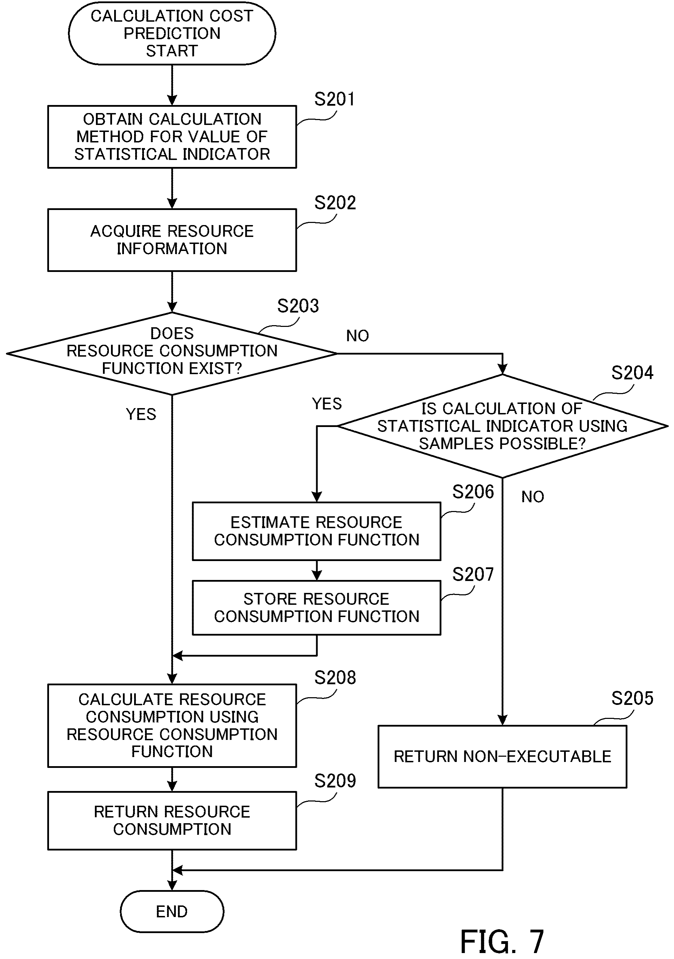

[Step S106] The statistical indicator management unit 140 executes a calculation cost prediction process for the value of the selected statistical indicator. Details of the calculation cost prediction process will be described later (see FIG. 7). Through the calculation cost prediction process, resource consumption for calculating the value of the statistical indicator is obtained. The resource consumption is calculated using a resource consumption function. If the resource consumption function has not been obtained, a return value of "non-executable" is returned.

[Step S107] The statistical indicator management unit 140 determines whether the return value of the calculation cost prediction process is "non-executable". If the return value is "non-executable", the statistical indicator management unit 140 advances the process to step S110. If the return value is not "non-executable" and the resource consumption has been calculated using the resource consumption function, the statistical indicator management unit 140 advances the process to step S108.

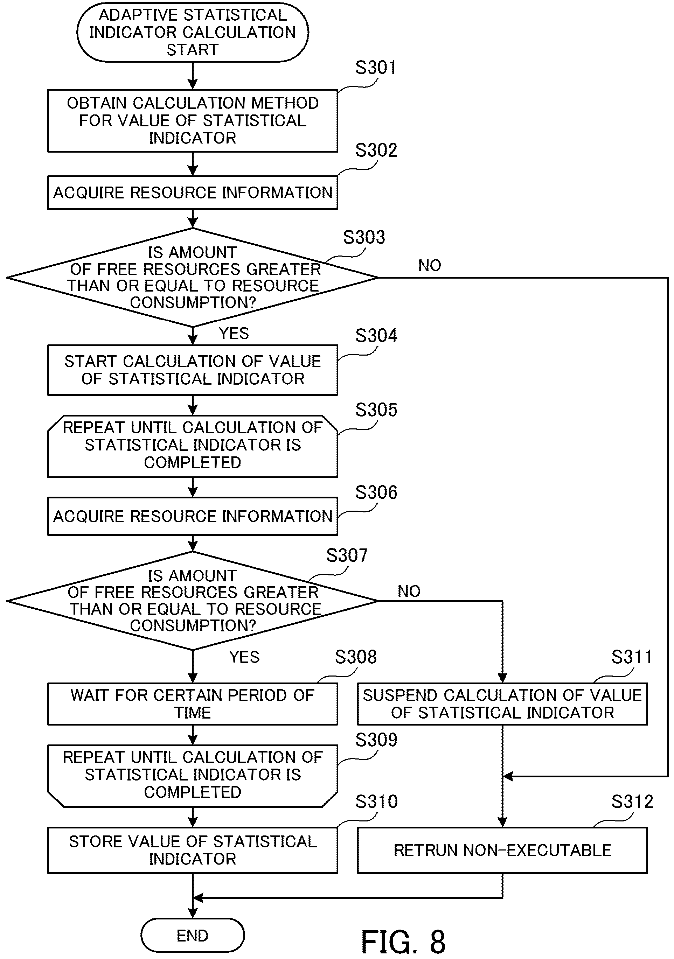

[Step S108] The statistical indicator management unit 140 performs an adaptive statistical indicator calculation process. Details of the adaptive statistical indicator calculation process will be described later (see FIG. 8). Note that in the adaptive statistical indicator calculation process, if sufficient resources for the statistical indicator calculation are not available, a return value of "non-executable" is returned.

[Step S109] The statistical indicator management unit 140 determines whether the return value of the adaptive statistical indicator calculation process is "non-executable". If the return value is "non-executable", the statistical indicator management unit 140 advances the process to step S110. If the return value is not "non-executable" and the value of the statistical indicator has been calculated, the statistical indicator management unit 140 advances the process to step S111.

[Step S110] The statistical indicator management unit 140 adds the selected statistical indicator to the end of the list of statistical indicators to be calculated. Thereafter, the statistical indicator management unit 140 advances the process to step S103.

[Step S111] The statistical indicator management unit 140 stores the result of calculating the value of the selected statistical indicator in the memory 102 or the storage device 103. For example, the statistical indicator management unit 140 sets the calculated value in the record of the selected statistical indicator in the statistical indicator information 113. Thereafter, the statistical indicator management unit 140 advances the process to step S103.

In this manner, the value of each statistical indicator is calculated. At this time, if the amount of resources available for calculating the value of a statistical indicator is insufficient, the calculation of the value of the statistical indicator is postponed. If sufficient resources become available for the calculation of the value of the statistical indicator that has been postponed, the value of the statistical indicator is calculated. This approach suppresses performance degradation of services provided by the server 100 caused by the calculation of a statistical indicator with high calculation cost.

Next, the calculation cost prediction process will be described in detail.

FIG. 7 is a flowchart illustrating an example procedure for the calculation cost prediction process. Hereinafter, the process illustrated in FIG. 7 will be described in order of step numbers.

[Step S201] The statistical indicator management unit 140 obtains a calculation method corresponding to the selected statistical indicator from the statistical indicator information 113.

[Step S202] The statistical indicator management unit 140 acquires resource information of the server 100. For example, the statistical indicator management unit 140 acquires information such as CPU utilization, memory utilization, and free memory capacity via the OS.

[Step S203] The statistical indicator management unit 140 determines whether a resource consumption function for the selected statistical indicator already exists. For example, if the resource consumption function is registered in association with the selected statistical indicator in the statistical indicator information 113, the statistical indicator management unit 140 determines that the resource consumption function exists. For example, there is a possibility that a resource consumption function is not registered for a statistical indicator whose value has not yet been calculated since it was set as a calculation target. If the resource consumption function already exists, the statistical indicator management unit 140 advances the process to step S208. If the resource consumption function does not exist, the statistical indicator management unit 140 advances the process to step S204.

[Step S204] The statistical indicator management unit 140 determines whether it is possible to calculate the value of the selected statistical indicator using sample data. For example, the statistical indicator management unit 140 determines that the calculation is possible, if a sufficient amount of sample data to be used for calculating the value of the statistical indicator is able to be prepared and resources (for example, memory capacity) corresponding to the amount of data are able to be prepared. If the calculation of the statistical indicator is possible, the statistical indicator management unit 140 advances the process to step S206. If the calculation is not possible, the statistical indicator management unit 140 advances the process to step S205.

[Step S205] The statistical indicator management unit 140 returns a return value of "non-executable" indicating that the process of calculating the calculation cost is not executable, and completes the calculation cost prediction process.

[Step S206] The statistical indicator management unit 140 estimates a resource consumption function using sample data. For example, the statistical indicator management unit 140 acquires a predetermined amount of sample data from the vector DB 111. The statistical indicator management unit 140 repeatedly calculates the value of the statistical indicator while changing the amount of data used for the calculation among the sample data, and measures the amount of resources used for the calculation. Then, based on the relationship between the amount of sample data used for the calculation and the amount of resources used for the calculation, the statistical indicator management unit 140 estimates the resource consumption function by, for example, regression analysis or the like.

[Step S207] The statistical indicator management unit 140 stores the estimated resource consumption function in the statistical indicator information 113.

[Step S208] The statistical indicator management unit 140 calculates the resource consumption to be used for calculating the value of the selected statistical indicator for the current vector DB 111, using the resource consumption function corresponding to the selected statistical indicator.

[Step S209] The statistical indicator management unit 140 returns the calculated resource consumption as a return value, and completes the calculation cost prediction process.

In this way, for each statistical indicator designated as a calculation target, the resource consumption to be used for calculating the value of that statistical indicator is calculated using the corresponding resource consumption function. Note that if no corresponding resource consumption function exists, a large amount of resources is consumed for estimating the resource consumption function. Therefore, after it is confirmed that sufficient computational resources are available, the resource consumption function is estimated.

For example, it is assumed that a free memory capacity of "30 GB" is obtained in the resource information acquisition process (step S202). Further, it is assumed that no resource consumption function exists for the selected statistical indicator ("NO" in step S203), and the resource consumption to be used for estimating the resource consumption function is "15 GB". In this case, the resource consumption is less than the free memory capacity. Therefore, it is determined that it is possible to calculate the value of the statistical indicator using samples ("YES" in step S204). Then, the value of the statistical indicator is calculated using the sample data, and a resource consumption function "y = f(N)" representing the relationship between, for example, the amount of resources y (y is a real number) and the number of pieces of data N (N is a natural number) is estimated by a method such as regression analysis. In the case where the resource consumption increases according to the power of the amount of data, the resource consumption function is, for example, a function like "f(N) = 0.003 × N²".

In this connection, in the calculation cost prediction process, not only the memory consumption but also the consumption (calculation cost) of other resources, such as CPU utilization and I/O utilization, is calculated for statistical indicator calculation.

The resource consumption is obtained by inputting a variable value such as the amount of data in the vector DB 111 into the resource consumption function. Then, based on the resource consumption, the adaptive statistical indicator calculation process is performed.

FIG. 8 is a flowchart illustrating an example procedure for the adaptive statistical indicator calculation process. Hereinafter, the process illustrated in FIG. 8 will be described in order of step numbers.

[Step S301] The statistical indicator management unit 140 acquires a calculation method for the value of the selected statistical indicator from the statistical indicator information 113.

[Step S302] The statistical indicator management unit 140 acquires resource information of the server 100.

[Step S303] The statistical indicator management unit 140 determines whether the amount of free resources in the server 100 is greater than or equal to the resource consumption calculated in the calculation cost prediction process (see FIG. 7). If the amount of free resources is greater than or equal to the resource consumption, the statistical indicator management unit 140 advances the process to step S304. If the amount of free resource is less than the resource consumption, the statistical indicator management unit 140 advances the process to step S312.

[Step S304] The statistical indicator management unit 140 starts calculation of the value of the selected statistical indicator using the obtained calculation method. In the calculation of the value of the statistical indicator, for example, a prediction process such as regression analysis is usable. The statistical indicator management unit 140 executes the following steps S305 to S309 in parallel with the calculation of the value of the statistical indicator.

[Step S305] The statistical indicator management unit 140 repeatedly executes steps S306 to S308 until the calculation of the value of the statistical indicator is completed.

[Step S306] The statistical indicator management unit 140 acquires the resource information of the server 100. The acquired resource information includes the amount of free resources and the amount of resources being consumed for the calculation of the value of the statistical indicator.

[Step S307] The statistical indicator management unit 140 determines whether the amount of free resources in the server 100 is greater than or equal to the resource consumption calculated in the calculation cost prediction process (see FIG. 7). For example, the statistical indicator management unit 140 compares a value obtained by subtracting the amount of resources currently used for the calculation of the value of the statistical indicator from the resource consumption obtained in advance, with the current amount of free resources. If the result of the comparison indicates that the current amount of free resources is greater, the statistical indicator management unit 140 determines that the amount of free resources is greater than or equal to the resource consumption. If the amount of free resources is greater than or equal to the resource consumption, the statistical indicator management unit 140 advances the process to step S308. If the amount of free resource is less than the resource consumption, the statistical indicator management unit 140 advances the process to step S311.

[Step S308] The statistical indicator management unit 140 waits for a certain period of time.

[Step S309] When the calculation of the value of the statistical indicator is completed, the statistical indicator management unit 140 advances the process to step S310.

[Step S310] The statistical indicator management unit 140 stores the result of calculating the value of the statistical indicator in the statistical indicator information 113. Thereafter, the statistical indicator management unit 140 completes the adaptive statistical indicator calculation process.

[Step S311] The statistical indicator management unit 140 suspends the calculation of the value of the statistical indicator. For example, the statistical indicator management unit 140 saves intermediate information in the middle of the calculation of the value of the statistical indicator, into the memory 102. Thereafter, when it becomes possible to calculate the value of the statistical indicator, the statistical indicator management unit 140 retrieves the saved information from the memory 102, and resumes the calculation of the value of the statistical indicator.

[Step S312] The statistical indicator management unit 140 returns a return value of "non-executable" indicating that the calculation of the value of the statistical indicator is not executable.

In this way, the value of the statistical indicator is calculated when sufficient free resources for calculating the value of the statistical indicator are available. Further, if the amount of free resources decreases during the calculation of calculating the value of the statistical indicator, the calculation of the value of the statistical indicator is suspended. Therefore, even after the calculation of the value of the statistical indicator is started, the calculation of the value of the statistical indicator is suspended if the processing load on the server 100 increases, thereby suppressing a degradation in the performance of services.

For example, it is assumed that the memory usage (A) predicted in the calculation cost prediction process (see FIG. 7) is "15 GB". In addition, it is assumed that the free memory capacity (C) acquired in the resource information acquisition process of step S302 is "10 GB". In this case, if "C > A" is satisfied, it is determined in step S303 that the amount of free resources is greater than or equal to the resource consumption regarding the memory capacity.

If it is determined in step S303 that amounts of free resources for all types of resources (CPU utilization, memory capacity, I/O utilization, etc.) are greater than or equal to respective resource consumption, the calculation of the value of the statistical indicator is started in step S304.

Even during the calculation of the value of the statistical indicator, it is determined in step S307 whether the amount of free resources is greater than or equal to the resource consumption. For example, it is assumed that the memory usage (A) predicted in the calculation cost prediction process (see FIG. 7) is "15 GB". Further, it is assumed that the memory capacity (B) being consumed for the calculation of the value of the statistical indicator is "10 GB", and the free memory capacity (C) acquired in the resource information acquisition process of step S306 is "10 GB". In this case, if "C > A - B" is satisfied, it is determined in step S307 that the amount of free resources is greater than or equal to the resource consumption regarding the memory capacity.

The calculation of the value of the statistical indicator is continued while it is determined in step S307 that amounts of free resource for all types of resources (CPU utilization, memory capacity, I/O utilization, etc.) are greater than or equal to respective resource consumption. If the determination that the amounts of free resource are greater than or equal to the respective resource consumption continues until the calculation of the value of the statistical indicator is completed, the value of the statistical indicator is obtained.

In this manner, the amount of free resources is checked as needed, and the calculation of the value of the statistical indicator is continued as long as the amount of free resources is greater than or equal to the amount of resources needed for the calculation of the value of the statistical indicator.

The statistical indicator management unit 140 transmits statistical information including the calculated values of statistical indicators to the terminal device 30 in response to a request from the terminal device 30. The transmitted statistical information is displayed on the terminal device 30. The administrator refers to the statistical information displayed on the terminal device 30 and determines whether to perform index reconstruction.

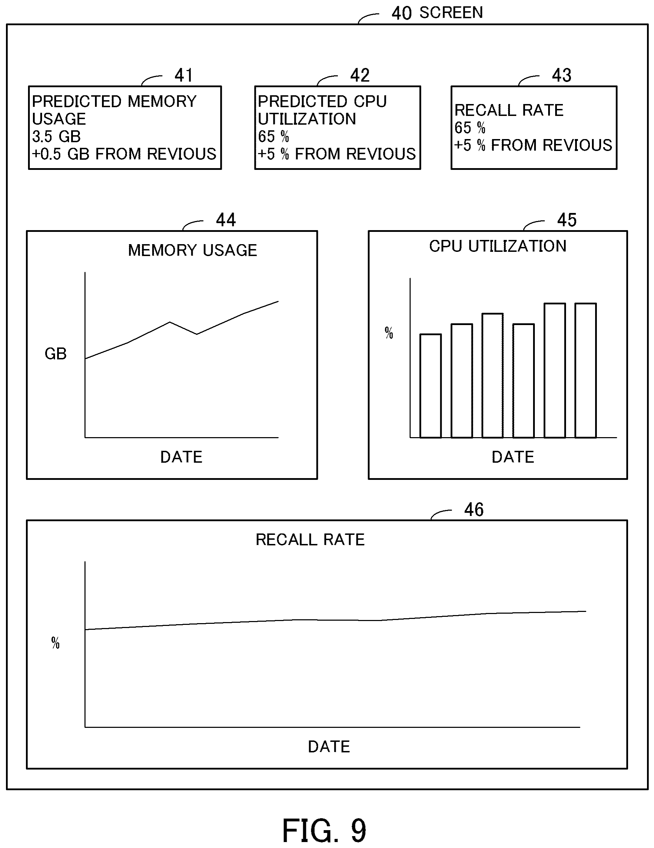

FIG. 9 illustrates an example of a screen displaying statistical indicator information. FIG. 9 illustrates a screen 40 that displays statistical indicator information in the case where a recall rate is selected as a statistical indicator to be displayed. The screen 40 displays a predicted memory usage display section 41, a predicted CPU utilization display section 42, a recall display section 43, a memory usage graph 44, a CPU utilization graph 45, and a recall graph 46.

The predicted memory usage display section 41 presents an amount of memory predicted to be used for calculating the recall rate. The predicted CPU utilization display section 42 presents CPU utilization predicted to be used for the calculation of the recall rate. The recall display section 43 presents a recall rate in AI using the vector DB 111. The memory usage graph 44 represents a transition of the memory usage rate of the server 100. The CPU utilization graph 45 represents a transition of the CPU utilization of the server 100. The recall graph 46 represents a transition of the recall rate in AI using the vector DB 111.

The administrator of the server 100 refers to the screen 40 displayed on the terminal device 30 and determines whether to reconstruct the index 112 of the vector DB 111. When determining that the reconstruction needs to be performed, the administrator instructs the server 100 via the terminal device 30 to perform the index reconstruction. Then, the index construction unit 150 of the server 100 reconstructs the index 112.

In the manner described above, statistical indicators useful for determining whether to reconstruct the index 112 are calculated during time zones in which surplus resource capacity is available in the server 100, and are presented to the administrator. Accordingly, even in the case a statistical indicator with high calculation cost is designated as a calculation target, a degradation in the performance of services provided by the server 100 is suppressed.

The accuracy of the vector DB 111 depends on the stored dataset. In this case, the performance of the vector DB 111 may be improved by adjusting the values of parameters. For example, the search accuracy of the vector DB 111 significantly depends on the characteristics (distribution, insertion order, and embedding quality) of the dataset. Specifically, there is a case where the search accuracy of the vector DB 111 decreases by approximately 17% merely due to a difference in the order of INSERT (data insertion). Further, the accuracy may decrease as the number of pieces of data increases. Furthermore, differences in preprocessing such as a chunking method, a summarization process, and addition of supplementary information in a process of generating embeddings may change a distribution of data in the data space, and accordingly may also change optimal parameters and an index strategy for the vector DB 111.

The parameters that affect the performance of the vector DB 111 include, for example, the following parameters.

As fixed parameters, there are the maximum number of connections for each node in a graph, vector dimensions, the number of searches during construction, and others. The maximum number of connections for each node in a graph is adjusted taking into account a trade-off between the amount of memory and search speed. The vector dimensions are adjusted taking into account a trade-off between accuracy and the amount of memory and storage. The number of searches during construction is adjusted taking into account a trade-off between index construction time and accuracy.

As variable parameters, there are the number of searches during search, a multiplier for memory usage during search, a distance calculation metric, and others. The number of searches during search is adjusted taking into account a trade-off between search accuracy and search time. The multiplier for memory usage during search is adjusted taking into account a trade-off between the amount of memory and search speed. The distance calculation metric (e.g., a threshold for similarity determination) is adjusted for each dataset based on search characteristics.

By the above processes, at least the following effects are obtained.

### (1) Elimination of Ambiguity in Determination Criteria for Index Reconstruction

If the calculation of the values of statistical indicators that the administrator desires to check is delayed, it becomes difficult to identify the cause of index performance degradation. As a result, index reconstruction may be performed through, for example, periodic index reconstruction even if the cause of performance degradation is irrelevant to the index.

As described in the second embodiment, the server 100 is able to efficiently obtain the values of statistical indicators that the administrator desires to check, thereby facilitating introduction of new statistical indicators. This enables prediction of resource consumption and calculation of the values of statistical indicators using sufficient free resources while maintaining stable operation of the vector DB 111. As a result, for example, it becomes possible to perform effective index reconstruction at appropriate timing under stable operation.

### (2) Elimination of Operational Instability Caused by High Calculation Costs of Statistical Indicators for High-Dimensional Vectors

Calculation of the value of a statistical indicator for the vector DB 111 may need a high calculation cost, and if the calculation is executed at incorrect timing, a load on the entire system becomes excessive, which may hinder stable operation.

As described in the second embodiment, in collection of statistical indicators, the server 100 automatically calculates the values of the statistical indicators at timing when sufficient free resources are available, through prediction of resource consumption and dynamic execution control of calculation jobs. As a result, an excessive load on the entire system is avoided, and desired statistical indicators are acquired while stable operation is maintained. Further, for a statistical indicator whose calculation cost is unknown, the calculation cost is estimated in a small-scale environment using sample data, and the value of the statistical indicator is calculated at appropriate timing according to the calculation cost. Therefore, the administrator is able to easily acquire information on desired statistical indicators and to appropriately determine whether to execute tuning means such as index reconstruction.

Although the embodiments have been exemplified above, the configuration of each unit described in the embodiments may be replaced with another configuration having a similar function. In addition, any other components or processes may be added. Furthermore, any two or more configurations (features) of the above-described embodiments may be combined.

According to one aspect, it is possible to predict the amount of resources consumed for calculation of the values of statistical indicators.

## Claims

1. An information processing apparatus (10) comprising:
processing means (12) for:
extracting a subset of vector data from a vector database (1);
calculating a value of a predetermined statistical indicator using the extracted subset of the vector data;
generating a function for obtaining an amount of resources to be used for calculating the value of the statistical indicator for the vector database (1), based on a first resource amount used for calculating the value of the statistical indicator using the subset of the vector data; and
calculating a second resource amount to be used for calculating the value of the statistical indicator for the vector database (1), using the generated function.

2. The information processing apparatus (10) according to claim 1, wherein the processing means (12) generates the function by regression analysis.

3. The information processing apparatus (10) according to claim 1, wherein the processing means (12)
checks whether the function for obtaining the amount of resources to be used for calculating the value of the statistical indicator exists, and
generates the function upon determining that the function does not exist.

4. The information processing apparatus (10) according to claim 1, wherein the processing means (12)
determines, based on the second resource amount, whether calculation of the value of the statistical indicator for the vector database (1) is possible, and
calculates the value of the statistical indicator for the vector database (1) upon determining that the calculation of the value of the statistical indicator is possible.

5. The information processing apparatus (10) according to claim 4, wherein the processing means (12)
determines that the calculation of the value of the statistical indicator for the vector database (1) is not possible upon determining that an amount of free resources is less than the second resource amount, and
calculates the value of the statistical indicator for the vector database (1) after the amount of free resources becomes greater than or equal to the second resource amount.

6. The information processing apparatus (10) according to claim 4, wherein, during the calculation of the value of the statistical indicator for the vector database (1), the processing means (12)
determines, based on the second resource amount, whether a resource shortage will occur,
suspends the calculation of the value of the statistical indicator upon determining that the resource shortage will occur, and
resumes the calculation of the value of the statistical indicator for the vector database (1) after an amount of free resources becomes greater than or equal to the second resource amount.

7. A computer program that causes a computer to perform a process comprising:
extracting a subset of vector data from a vector database (1);
calculating a value of a predetermined statistical indicator using the extracted subset of the vector data;
generating a function for obtaining an amount of resources to be used for calculating the value of the statistical indicator for the vector database (1), based on a first resource amount used for calculating the value of the statistical indicator using the subset of the vector data; and
calculating a second resource amount to be used for calculating the value of the statistical indicator for the vector database (1), using the generated function.

8. An information processing method executed by a computer, the information processing method comprising:
extracting a subset of vector data from a vector database (1);
calculating a value of a predetermined statistical indicator using the extracted subset of the vector data;
generating a function for obtaining an amount of resources to be used for calculating the value of the statistical indicator for the vector database (1), based on a first resource amount used for calculating the value of the statistical indicator using the subset of the vector data; and
calculating a second resource amount to be used for calculating the value of the statistical indicator for the vector database (1), using the generated function.
